(19) Europäisches Patentamt
European Patent Office
Office européen des brevets

(11) Publication number: **0 379 315 B1**

(12) **EUROPEAN PATENT SPECIFICATION**

(45) Date of publication of patent specification: **18.05.94** (51) Int. Cl.5: **G02F 1/1335**

(21) Application number: **90300373.9**

(22) Date of filing: **12.01.90**

(54) **Electro-optical liquid crystal device.**

(30) Priority: **19.01.89 JP 10405/89**
**16.02.89 JP 36623/89**
**17.02.89 JP 37570/89**
**27.02.89 JP 45609/89**
**24.03.89 JP 72815/89**
**28.03.89 JP 76114/89**
**06.04.89 JP 87436/89**
**25.04.89 JP 105019/89**
**27.04.89 JP 108571/89**

(43) Date of publication of application:
**25.07.90 Bulletin 90/30**

(45) Publication of the grant of the patent:
**18.05.94 Bulletin 94/20**

(84) Designated Contracting States:
**DE FR GB**

(56) References cited:
**EP-A- 0 239 433**
**EP-A- 0 246 842**
**EP-A- 0 349 900**
**GB-A- 1 462 978**

**CONFERENCE RECORD OF THE 1988 INTERNATIONAL DISPLAY RESEARCH CONFERENCE, San Diego, CA, 4th - 6th October 1988, pages 159-160, IEEE, New York, US; I. FUKUDA et al.: "Achromatic supertwisted nematic LCD using birefringent film"**

(73) Proprietor: **SEIKO EPSON CORPORATION**
**4-1, Nishishinjuku 2-chome**
**Shinjuku-ku Tokyo(JP)**

(72) Inventor: **Okumura, Osamu**
**c/o Seiko Epson Corporation, 3-5 Owa 3-chome**
**Suwa-shi, Nagano-ken(JP)**
Inventor: **Toki, Motoyuki**
**c/o Seiko Epson Corporation, 3-5 Owa 3-chome**
**Suwa-shi, Nagano-ken(JP)**
Inventor: **Horiguchi, Hirosada**
**c/o Seiko Epson Corporation, 3-5 Owa 3-chome**
**Suwa-shi, Nagano-ken(JP)**

(74) Representative: **Miller, Joseph et al**
**J. MILLER & CO.**
**34 Bedford Row,**
**Holborn**
**London WC1R 4JH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 379 315 B1

Rank Xerox (UK) Business Services
(3.10/3.09/3.3.3)

## Description

This invention relates to electro-optic liquid crystal devices.

In the conventional homogeneous system ECB (electrically controlled birefringence) mode, twisted nematic mode and super twisted nematic mode, display of a liquid crystal device is effected by control of the double refraction of liquid crystal material and therefore colouration of the display is inevitable. In order to avoid colouration, an optical anisotropic substance incorporated in the liquid crystal device has been proposed in Japanese Patent Application No. 62-121701. A display mode of this type of liquid crystal device is hereinafter referred to as "NTN mode".

EP-A- 0 239 433 and GB-A-1 462 978 disclose both liquid crystal devices comprising a nematic liquid crystal layer of positive anisotropy of the refractive indices and an anisotropic layer which is optically negative ($N_e < N_o$); however the extraordinary axis of the anisotropic layer is oriented perpendicular to the liquid crystal layer.

Figure 3 shows a sectional view of an electro-optic liquid crystal device using the conventional NTN mode. The liquid crystal device has an upper polarising plate 1, a liquid crystal cell 2, an optical anisotropic film 3, and a lower polarising plate 5. The liquid crystal cell 2 has an upper substrate 21, a lower substrate 22, transparent electrodes 23 and a liquid crystal layer 24.

In one practical embodiment, a liquid crystal material ZLI-4287 ( $\Delta$ n = 0.029) (product of Merck Co.) is used for the layer 24 and is homogeneously oriented, the liquid crystal cell 2 having a cell gap (d) of 5.9 $\mu$m so that the retardation ( $\Delta$ n x d) is 0.55 $\mu$m.

A mono-axially stretched film of a polycarbonate polymer is used for the anisotropic film 3. The stretched film 3 has refractive indices of N1o = 1.589, N2o = 1.590 and N3e = 1.594, and a thickness of 140 $\mu$m, so that its retardation is 0.56 $\mu$m. "N3e" means the refractive index in the stretched direction of the film or the direction of the optic axis. Accordingly, in the stretched film 3, the refractive index (ne) of an extra-ordinary ray is larger than the refractive index (no) of an ordinary ray. A stretched film of this type is said to have an optically positive uni-axiality.

Figure 4 shows the relation of the respective axes of a conventional electro-optic liquid crystal device, where an angle 912 formed by a polarisation axis (absorption axis) direction 100 of the upper polarising plate 1 and a rubbing direction 210 of the upper substrate 21 of the liquid crystal cell 2 is 45°, an angle 942 formed by a stretched direction of the stretched film 3 and a rubbing direction 220 of the lower substrate 22 of the liquid crystal cell is 90°, and an angle 954 formed between a polarisation axis (absorption axis) direction 500 of the lower polarising plate 5 and the stretched direction 400 is 45°.

Using the conventional electro-optical liquid crystal device constructed as above, light rays were applied in a direction perpendicular to the plane of the liquid crystal cell 2 and the transmittance was measured. The characteristics shown in Figure 5 were obtained. In Figure 5, the curves 61, 62, 63 are voltage-transmittance curves for light rays having wavelengths of 450 nm, 550 nm and 650 nm, respectively. It will be noted from Figure 5 that the transmittance values are low in the "off time" for each curve and therefore the electro-optic liquid crystal device has excellent characteristics and can display high contrast images. However, the conventional NTN mode type electro-optic liquid crystal device has the disadvantage that it has a narrow range of visual angles in which the displayed image may satisfactorily be seen (this hereinafter is referred to simply as "visual angle" only).

Figure 7 shows the visual angle characteristic of a conventional electro-optic liquid crystal device, where the centre of the drawing indicates a direction perpendicular to the plane of the liquid crystal cell, and the circles indicate directions with inclined angles of 10°, 20°, 30°, 40° and 50° from the perpendicular in order from the centre of the circles. The four "up", "down", "left" and "right" directions correspond to the four directions shown in Figure 4. Reference numerals 71, 72, 73, 74, 75 are contrast curves with contrast ratios 1, 3, 10, 30 and 100, respectively. The shadowed region indicates a contrast ratio of 1 or less, where the display is reversed. Thus the conventional NTN mode type electro-optic liquid crystal device has the drawback that the high contrast region is narrow and the display is easily reversed, and this is a significant factor causing a psychological sense of a narrow visual angle.

The present invention seeks to provide an electro-optic liquid crystal device with a broad visual angle by the use of a mono-axially stretched polymer film having optically negative uni-axiality.

According to the present invention there is provided an electro-optic liquid crystal device with the features of claim 1.

The liquid crystal layer 24 is homogeneously oriented or is twistedly oriented.

The or each said optical anisotropic layer may be a mono-axially stretched film consisting essentially of a polymer of the following acrylate derivatives:

$CH_2 = CX - COOR$

where X represents $-CH_3$, -Cl, -Br, -CN or -SCH group; and R represents an alkyl group having from 1 to 4 carbon atoms or a benzine ring derivative.

Alternatively the or each said optical anisotropic layer may be a mono-axially stretched film made of a mixture of a polymer and a liquid crystal material.

Another possibility is that the or each said optical anisotropic layer may be a mono-axially stretched polystyrene film.

A further possibility is the or each said optical anisotropic layer may be a mono-axially stretched film made of a co-polymer of polystyrene and an organic polymer, or made of a mixture of polystyrene and an organic polymer.

Yet further the or each said optical anisotropic layer may be a mono-axially stretched film of a polystyrene-organic polymer film laminate.

Preferably the wavelength dispersion of the double refractive indices of the or each said optical anisotropic layer is larger than 0.95 times the wavelength dispersion value of the double refractive indices of the liquid crystal layer.

The electro-optic liquid crystal device may include a further optical anisotropic layer sandwiched between the polarisers and having positive uni-axiality.

The invention is illustrated, merely by way of example, in the accompanying drawings, in which:-

Figure 1 is a sectional view of one embodiment of an electro-optic liquid crystal device according to the present invention;

Figure 2 shows the relation of the respective axes of the electro-optic liquid crystal device of Figure 1;

Figure 3 is a sectional view of a conventional electro-optic liquid crystal device;

Figure 4 shows the relation of the respective axes of the conventional electro-optic liquid crystal device of Figure 3;

Figure 5 shows the electro-optic characteristics of the electro-optic liquid crystal device of Figure 1 and the conventional electro-optic liquid crystal device of Figure 3;

Figure 6 shows the visual angle characteristic of the electro-optic liquid crystal device of Figure 1;

Figure 7 is a drawing to show the visual angle characteristic of the conventional electro-optic liquid crystal device of Figure 3;

Figure 8 is a sectional view of a second embodiment of an electro-optic liquid crystal device according to the present invention;

Figure 9 shows the relation of the respective axes of the electro-optic liquid crystal device of Figure 8;

Figure 10 shows the relation of the respective axes of a modification of the electro-optic liquid crystal device of Figure 1;

Figure 11 shows the visual angle characteristic of the modified electro-optic liquid crystal device of Figure 1;

Figure 12 shows the visual angle characteristic of a comparative electro-optic liquid crystal device;

Figure 13 is a sectional view of a third embodiment of electro-optic liquid crystal device according to the present invention;

Figure 14 shows the relation of the respective axes of the electro-optic liquid crystal device of Figure 13;

Figure 15 shows the influence of the wavelength dispersion value of the double refractive indices of the an optical anisotropic layer on the colouration of the display of an electro-optic liquid crystal device;

Figure 16 shows the mechanism of the optical compensation of an electro-optic liquid crystal device according to the present invention; and

Figure 17 is a drawing to show the mechanism of the optical compensation in a conventional electro-optic liquid crystal device.

Throughout the drawings like parts have been designated by the same reference numerals.

In the conventional electro-optic liquid crystal device of Figure 3, the optical anisotropic film 3 is provided to avoid colouration in a direction perpendicular to the plane of the liquid crystal cell 2 without consideration of any other direction.

Figure 17 is provided to explain the mechanism of optical compensation of the conventional electro-optic liquid crystal device shown in Figure 3, where the twisted angle of the liquid crystal cell 2 is set at 0° for simple explanation. An index ellipsoid 20 of the liquid crystal layer 24 and an index ellipsoid 40 of the optical anisotropic film 3 for colouration compensation are both in the form of a rugby ball shaped rotary ellipsoid which has an optically positive uni-axiality. The index ellipsoid 20 has three main refractive indices, n1o, n2o and n3e. "n3e" is the refractive index in the major axis direction of the liquid crystal molecule, "n2o" is the refractive index in the direction perpendicular to the said major axis direction in the plane of

the liquid crystal cell 2, and "n1o" is the refractive index in the direction perpendicular to the plane of the liquid crystal cell. The index ellipsoid 40 also has three main refractive indices N1o, N2o, N3e. When the optical anisotropic film is a monoaxially stretched film, N3e is the refractive index in the film stretching direction, N2o is the refractive index in the direction perpendicular to said film stretching direction in the plane of the film, and N1o is the refractive index in the direction of the thickness of the film.

The two index ellipsoids 20, 40 are such that the optical extra-ordinary axes n3e and N3e are at right angles. Accordingly, light introduced in a direction perpendicular to the plane of the liquid crystal cell (the direction of the Z axis in Figure 17) gives ordinary rays and extra-ordinary rays which are exchanged with each other in the liquid crystal cell 2 and the optical anisotropic film 3, and therefore, the light emerges from the cell in the same state as that when introduced. Accordingly, if the polarising plates 1, 5 are cross Nicols, for instance, the display is black so that complete compensation can be effected for light of all colours.

However, compensation of the optical anisotropic film 3 is not sufficient for the rays as introduced from any direction other than the direction of the Z axis. For instance, consider light introduced in a direction which is inclined between the direction of the major axis (the direction of the X axis in Figure 17) of the liquid crystal molecules of the cell and the direction of the Z axis. Since the refractive index (ne) of the extra-ordinary ray in the liquid crystal cell appears to be small, the value of the refractive index anisotropy ($\Delta n \equiv | ne - no |$) of the liquid crystal cell is also small. However, since the values of the refractive indices No and Ne of the ordinary ray and the extra-ordinary ray of the optical anisotropic film 3 are maintained constant irrespective of the angle of incidence, there is a difference in the retardation between the liquid crystal cell and the optical anisotropic film so that compensation is unbalanced.

In accordance with the present invention, the index ellipsoid of the optical anisotropic film for colouration compensation is a frisbee-shaped rotary ellipsoid having an optically negative uni-axiality whereby compensation over a broader range of visual angles is possible. Figure 16 shows the mechanism of optical compensation of an electro-optic liquid crystal device according to the present invention.

In Figure 16, the point of difference from the conventional electro-optic liquid crystal device is that the refractive index N3e of the extra-ordinary ray of the optical anisotropic film 3 is smaller than the refractive indices N1o and N20 of the ordinary ray thereof. An index ellipsoid 30 of this type appears the same as that of the conventional electro-optic liquid crystal device only when it is observed from the direction of the Z axis, but it has different double refractive indices for other directions. For instance, consider when a ray is introduced into the liquid crystal cell 2 from a direction inclined between the direction of the X axis and the direction of the Z axis. From this direction, any of the liquid crystal cell is apparently small so that the value of $\Delta n$ is also small. As opposed to this, the value of $\Delta N (\equiv | Ne - No |)$ of the optical anisotropic film 3 is also small, since Ne is large. Accordingly, by employment of the optical anisotropic film 3 having an optically negative uni-axiality, the difference in the retardation between the liquid crystal cell 2 and the optical anisotropic film 3 in a direction inclined to the direction of the Z axis may be minimised. The same compensation relationship may apply to rays introduced into the liquid crystal cell from every other direction. In accordance with the present invention, therefore, compensation over a broader visual field range is possible than in the case of the conventional electro-optic liquid crystal device so that a broader visual angle can be obtained.

More generally, even when the liquid crystal cell has a twisted angle, the same compensation is possible. In the case where the optical anisotropic film 3 is to have a twisted angle which is in a direction perpendicular to the twisted angle of the liquid crystal cell 2, as shown in Figure 8, the optical anisotropic film 3 consists of a laminate of a plurality of layers 31 to 35. In this case, two layers symmetrical to each other with respect to the contact plane between the liquid crystal cell and the optical anisotropic film are in the above mentioned compensation relation. (The corresponding relation of the two symmetrical layers is shown by the dotted line in Figure 8). Accordingly, even in the case of a twisted nematic liquid crystal cell, employment of an optical anisotropic film having an optically negative uni-axiality will attain a broader visual angle than with a conventional electro-optic liquid crystal device.

Where some rough compensation (but not so severe compensation as mentioned above) is to be effected by the use of one or two mono-axially stretched films, employment of one or two mono-axially stretched films each having an optically negative uni-axiality is recommended for the purpose of enlarging the visual angle without interfering with the display characteristic in the direction perpendicular to the plane of the liquid crystal cell.

The following examples are intended to illustrate the present invention in more detail, but not to limit it in any way.

## EXAMPLE 1:

Figure 1 is a sectional view of one embodiment of an electro-optic liquid crystal device according to the present invention.

In the liquid crystal cell 2, a liquid crystal material ZLI-4287 ( $\Delta$ n = 0.0929) (product of Merck Co.) was used for the liquid crystal layer 24 and homogeneously oriented to the liquid crystal cell with a cell gap (d) of 5.9 $\mu$m.

A polymethyl methacrylate (PMMA) film stretched at 100°C in silicone oil was used as the optical anisotropic film 3. Normally, when polymer films are stretched the refractive index in the stretched direction is increased so that the stretched film has an optically positive uni-axiality. However, where PMMA or polymethyl $\alpha$-fluoroacrylate (PMFA) is stretched, the refractive index in the stretched direction decreases so that the stretched film has an optically negative uni-axiality. The refractive indices in this case are N1o = 1.4906, N2o = 1.4906 and N3e = 1.4900. The film thickness was 930 $\mu$m and the retardation was 0.56 $\mu$m.

Figure 2 shows the relation of the respective axes of the electro-optic liquid crystal device of Figure 1. The angle 912 formed by the direction 100 of the polarisation axis (absorption axis) of the upper polarising plate 1 and the rubbing direction 210 of the upper substrate 21 of the liquid crystal cell 2 is 45° to the left; the angle 932 formed by the stretched direction 300 of the mono-axially stretched film 3 and the rubbing direction 220 of the lower substrate 22 of the liquid crystal cell is 0°; an angle 953 between the directions 300, 500 is 45° to the right.

The electro-optic liquid crystal device of Figure 1 has almost the same characteristics as the conventional electro-optic liquid crystal device shown in Figure 3, so far as it is observed from a direction perpendicular to the plane of the liquid crystal cell.

Figure 6 shows the visual angle characteristic of the electro-optic liquid crystal device of Figure 1. Figure 6 corresponds to Figure 7 which shows the visual angle characteristic of the conventional electro-optic liquid crystal device of Figure 3. Comparing Figures 6 and 7, it will be seen that the amount of light leaked in the "off time" is small so that the display is hardly reversed, and therefore the electro-optic liquid crystal device of Figure 1 has a broader visual angle range than the conventional electro-optic liquid crystal device of Figure 3.

## EXAMPLE 2

Figure 8 shows a sectional view of another embodiment of an electro-optic liquid crystal device according to the present invention. This has been referred to briefly above.

In the liquid crystal cell 2, a liquid crystal material ZLI-4337 ( $\Delta$ n = 0.1569) (product of Merck Co.) was used for the liquid crystal layer 24 and twistedly oriented in the liquid crystal cell with a cell gap (d) of 5.7 $\mu$m.

Five mono-axially stretched PMMA films 31 to 35 were laminated and used as the optical anisotropic film 3. The refractive indices were N1o = 1.4906, N2o = 1.4906 and N3e = 1.4900. The thickness of one film was 300 $\mu$m and the retardation was 0.18 $\mu$m.

Figure 9 shows the relation of the respective axes of the electro-optic liquid crystal device of this Example. The angle 912 formed by the direction 100 of the polarisation axis (absorption axis) of the upper polarising plate 1 and the rubbing direction 211 of the upper substrate 21 of the liquid crystal cell is 45° to the left; the twist angle 992 of the liquid crystal layer 24 is 230° to the left; the angle 932 formed by the stretched direction 310 of the mono-axially stretched layer 31 and the rubbing direction 220 of the lower substrate 22 of the liquid crystal cell is 23° to the right; the angle 933 formed by the stretched direction of the nth mono-axially stretched layer of the optical anisotropic film 3 and the stretched direction of the (n-1)-th mono-axially stretched layer is 46° to the right; and the angle 953 formed by the direction 500 of the polarisation axis (absorption axis) of the lower polarising plate 5 and the stretched direction 350 of the mono-axially stretched layer 35 is 68° to the right.

The electro-optic liquid crystal device of Figure 8 has a broader visual angle range as compared with the conventional electro-optic liquid crystal device of Figure 3.

## EXAMPLE 3

In a modification of the electro-optical liquid crystal device of Figure 1, a liquid crystal material ZLI-4243 ($\Delta$ n = 0.1449) (product of Merck Co.) was used as the liquid crystal layer and twistedly oriented in the liquid crystal cell 2 with a cell gap (d) of 6.2 $\mu$m.

As the mono-axially stretched film 3, a monoaxially stretched PMMA film was used. The refractive indices are N1o = 1.4906, N2o = 1.4906 and N3e = 1.4900. The film thickness was 950 µm and the retardation was 0.57 µm.

Figure 10 shows the relation of the respective axes of the electro-optic liquid crystal device in this Example. The angle 912 formed by the direction 100 of the polarisation axis (absorption axis) of the upper polarising plate 1 and the rubbing direction 210 of the upper substrate 21 of the liquid crystal cell is 45° to the left; the twist angle 922 of the liquid crystal layer 24 is 210° to the left; the angle 932 formed by the stretched direction 300 of the mono-axially stretched film and the rubbing direction 220 of the lower substrate 22 of the liquid crystal cell is 0°; and the angle 953 between the directions 500, 300 is 135° to the left.

Figure 11 shows the visual angle characteristic of the electro-optic liquid crystal device of this Example. For comparison, a similar electro-optic liquid crystal device as above was prepared under the same conditions, except that a conventional polycarbonate film (N1o = 1.589, N2o = 1.590, N3e = 1.594, film thickness 140 µm) was employed as the mono-axially stretched film 3, and the visual angle characteristic of the electro-optic liquid crystal device is shown in Figure 12. In Figures 11 and 12, the centre indicates the direction perpendicular to the plane of the liquid crystal cell, and the outer circles indicates the directions with inclined angles of 10°, 20°, 30°, 40° and 50° from the perpendicular direction in order from the centre. The four "up", "down", "left" and "right" directions correspond to the four directions shown in Figure 10. Reference numerals 71, 72 and 73 are isocontrast curves with contrast ratios of 1, 3 and 10, respectively. The shadowed region is one having a contrast ratio of 1 or less, where the display is reversed. Comparing Figures 11 and 12, it will be appreciated that the electro-optic liquid crystal device of the present invention has a broader contrast ratio than the comparative electro-optic liquid crystal device. In addition, in the former the display is hardly reversed and it has a broader visual angle range.

## EXAMPLE 4

There are many examples of cell conditions for compensating the super twisted liquid crystal cell by the use of a mono-axially stretched film, in addition to those shown in Examples 2 and 3. One example of employing both an optical anisotropic film having an optically negative uni-axiality and an optical anisotropic having an optically positive uni-axiality will now be illustrated.

Figure 13 shows a sectional view of another embodiment of an electro-optic liquid crystal device similar to that shown in Figure 1, but having an optical anisotropic film 4 with optically positive uni-axiality.

In the liquid crystal cell 2, a liquid crystal material ZLI-3941 ($\Delta n = 0.1639$) (product of Merck Co.) was used for the liquid crystal layer 24 and twistedly oriented in the cell with a cell gap (d) of 5.5 µm.

As the optical anisotropic film 3 having optically negative uni-axiality, a mono-axially stretched PMMA film was employed. It has refractive indices of N1o = 1.4906, N2o = 1.4906 and N3e = 1.4900. The film thickness was 630 µm and the retardation was 0.38 µm.

On the other hand, a polycarbonate was used as the optical anisotropic film 4 having an optically positive uni-axiality. It has refractive indices of N1o = 1.589, N2o = 1.590 and N3e = 1.594. The film thickness was 105 µm, and the retardation was 0.42 µm.

Figure 14 shows the relation of the respective axes of the electro-optic liquid crystal device of this Example. The angle 912 formed by the direction 100 of the polarisation axis (absorption axis) of the upper polarising plate 1 and the rubbing direction 210 of the upper substrate 21 of the liquid crystal cell is 30° to the left; the twisted angle 922 of the liquid crystal cell is 240° to the left; the angle 932 formed by the stretched direction 300 of the mono-axially stretched film 3 and the rubbing direction 220 of the lower substrate 22 of the liquid crystal cell is 15° to the right; the angle 943 between the stretched directions 400 and 300 of the mono-axially stretched film 4 is 50° to the right; and the angle 954 between the directions 500 and 400 of the polarisation axis (absorption axis) of the lower polarising plate 5 is 55° to the right.

The electro-optic liquid crystal device of this Example also has a broader visual angle range, as compared with the conventional electro-optic liquid crystal device. Accordingly, it is possible to broaden and enlarge the visual angle range of the electro-optic liquid crystal device by using both an optical anisotropic film having an optically positive uni-axiality and an optical anisotropic film having an optically negative uni-axiality.

In the above mentioned Examples, a mono-axially stretched PMMA film was employed as the optical anisotropic film 3. However, PMMA has the disadvantage that it has small double refractive indices and therefore the film has to be relatively thick. Accordingly, optical anisotropic films were prepared from more preferable polymers than PMMA and were used in the following Examples 5 to 13.

**EXAMPLE 5**

Phenyl α -chloroacrylate

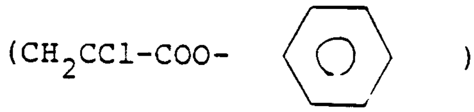

was synthesised and polymerised. The film thus formed was stretched at 110 °C at a stretching speed of 3 mm/sec to obtain a mono-axially stretched film having a thickness of 600 µm. This film had a value Δn of 0.0009 and a product Δn x d of 0.54 µm.

The film was used in the same manner as in Example 1, and an electro-optic liquid crystal device having a broad visual angle range was obtained.

**EXAMPLE 6**

Biphenyl α-bromoacrylate, biphenyl methacrylate, biphenyl α-cyanoacrylate and biphenyl α-thiocyanoacrylatewere synthesised and polymerised individually. Each of the thus prepared polymers was formed into a thin film and stretched at 120 °C at a stretching speed of 5 mm/sec to obtain a sheet having a thickness of 500 µm. The sheet was a mono-axially stretched film in each case, and all the thus stretched films had a product Δ n x d of 0.55 µm.

These films were used in the same manner as in Example 1, and electro-optic liquid crystal devices having a broad visual angle range were obtained.

**EXAMPLE 7**

Naphthalene methacrylate, naphthalene α-chloroacrylate, napthalene α-cyanoacrylate and napththalene α-thiocyanoacrylate were synthesised and polymerised individually. Each of the thus prepared polymers was formed into a thin film and stretched at 100 °C at a stretching speed of 5 mm/sec to obtain a sheet having a thickness of 500 µm. The sheet was mono-axially stretched in each case, and all the thus stretched films had a product Δ n x d of 0.55 µm.

These films were used in the same manner as in Example 1, and electro-optic liquid crystal devices having a broad visual angle range were obtained.

**EXAMPLE 8**

An NCY type nematic liquid crystal material of:

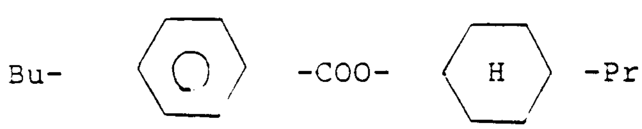

was added to a toluene solution of PMMA in an amount of 15% by weight of PMMA. The resulting solution was spread over water and dried to obtain a film with a thickness of 500 µm. The film was stretched at 120 °C at a stretching speed of 0.5 mm/sec to obtain a stretched film having a thickness of 270 µm, a stretched magnification of 1.8 and a product Δ n x d of 0.55 µm.

The film was used in the same manner as in Example 1, and an electro-optic liquid crystal device having a broad visual angle range was obtained.

**EXAMPLE 9**

A PCH type nematic liquid crystal of:-

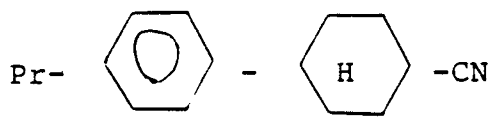

was added to a THF solution of PMMA. The resulting mixture was spread over water to obtain a film with a thickness of 200 µm. The film was stretched at 120 ° C to obtain a stretched film having a thickness of 100 µm and a product Δ n x d of 0.55 µm.

The film was used in the same manner as in Example 1, and an electro-optic liquid crystal device having a broad visual angle range was obtained.

**EXAMPLE 10**

A side chain type polymer liquid crystal material having a molecular structure given below was added to a toluene solution of PMMA in an amount of 20% by weight of PMMA:

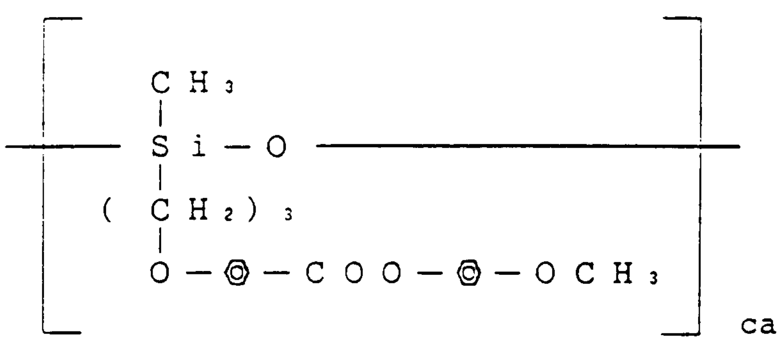
ca. 100

The solution was spread over water to obtain a film 500 µm in thickness. The film was stretched at 120 ° C to obtain a stretched film having a thickness of 270 µm and a product Δ n x d of 0.55 µm.

The film was used in the same manner as in Example 1 and an electro-optic liquid crystal device having a broad visual angle range was obtained.

Although PMMA was used in Examples 8 to 10, polymers of any other acrylate derivative, for example phenyl α-chloroacrylate, biphenyl α-bromoacrylate, biphenyl methacrylate or naphthalene methacrylate, can also be employed in place of PMMA and the same effect can be obtained.

**EXAMPLE 11**

A commercial polystyrene film (thickness 50 µm) was stretched at 120 ° C at a stretching speed of 0.5 mm/sec to obtain a mono-axially stretched polystyrene film having a thickness of 40 µm, a stretched magnification of 1.4 and a product Δ n x d of 0.55 µm.

The film was used in the same manner as in Example 1, and an electro-optic liquid crystal device having a broad visual angle range was obtained.

Polystyrene has a much larger value of Δn generated by stretching, than PMMA. Accordingly, only an extremely thin polystyrene film is required for the purpose of obtaining the necessary product Δ n x d. On the other hand, as polystyrene has a low heat resistance, polystyrene films having a thickness of several tens of mircometers deform when stretched, and therefore it is difficult to obtain uniformly stretched films from such thin polystyrene films. The following Examples 12 and 13 will illustrate a way of overcoming this problem.

## EXAMPLE 12

Styrene monomer and MMA monomer were copolymerised in the presence of an anionic catalyst, whereupon the monomer ratio Styrene/MMA = 2/1. The co-polymer obtained was formed into a thin film having a thickness of 200 µm. The film was stretched at 150 °C at a stretching speed of 0.5 mm/sec to obtain a stretched film having a thickness of 150 µm and a product $\Delta$ n x d of 0.55 µm. It has been found that the film has extremely narrow distribution of $\Delta$ n x d, and films of high quality can be produced with high reproducibility.

The film was used in the same manner as in Example 1, and an electro-optic liquid crystal device having a broad visual angle range was obtained.

## EXAMPLE 13

A 200 micron polycarbonate film was prepared. The film was dipped in a toluene solution of polystyrene whereby it was coated with polystyrene by dipping treatment. The thickness of the polystyrene coat was 50 µm. The coated film was stretched at 170 °C to obtain a uniform film having a product $\Delta$ n x d of 0.55 µm.

The film was used in the same manner as in Example 1, and an electro-optic liquid crystal device having a broad visual angle range was obtained.

## EXAMPLE 14

The value $\Delta$ n of a mono-axially stretched film varies, in general, in accordance with the wavelength of the light applied thereto. The wavelength dispersion value ( $\nu$ ) of $\Delta$ n is defined by the following formula on the basis of the value $\Delta$ n to light of 450 nm and the value $\Delta$ n to light of 650 nm.

$$\nu \equiv \Delta n\ (450\ nm) / \Delta n\ (650\ nm)$$

The liquid crystal layer 24 of Example 3 has the property that the colouration of the display significantly varies in accordance with the wavelength dispersion value ($\nu_{RF}$) of the value $\Delta$ n of the mono-axially stretched film. Figure 15 shows the variation of the colouration of the display in accordance with the variation of the value ($\nu_{RF}$) from 1.0 to 1.7, on the chromaticity co-ordinates of CIE 1931 XYZ chromaticity diagram, where the mark (*) in the near centre of the diagram is the neutral point. The value near the neutral point indicates a less colouration. The $\nu_{RF}$ value of a mono-axially stretched film of an ordinary polymer is nearly 1.06 or so. Where the value is enlarged to the level of the wavelength dispersion value ($\nu_{LC}$, to which is 1.17 in this case) of $\Delta$ n of liquid crystal material or more, preferably approximately from 1.3 to 1.7, the colouration may be reduced.

For instance, the mono-axially stretched film of commercial polystyrene film used in the previously mentioned Example 11 has the largest $\nu_{RF}$ value among known polymers, which is approximately 1.12. The value is more than 0.95 times the value $\nu_{LC}$, and the colouration of the display is less than the case using ordinary polymers. Needless to say, as the mono-axially stretched polystyrene film has an optically negative uni-axiality, the visual angle range of the electro-optic liquid crystal device having the film is improved and broadened.

## EXAMPLE 15

In order to elevate the colouration reducing effect of Example 14, a film having a larger $\nu_{RF}$ value was employed.

As the film having a larger $\nu_{RF}$ value, for example, a mono-axially stretched film prepared by blending polyvinyl chloride and a polymer liquid crystal compound and mono-axially stretching the film from the blend may be employed. The liquid crystal material and the mono-axially stretched film employed in Example 15 have the following values ( $\nu$ ):

$\nu_{LC}$ = 1. 1 7
$\nu_{RF}$ = 1. 3 0

The film was used in the same manner as in Example 1, whereby the colouration of the display of the electro-optic liquid crystal device could be reduced without interfering with the broad visual angle range and

the high display contrast.

In order to prepare films having a large $\nu_{RF}$ value, other methods may also be employed, where a film having a large value $\nu$ and a film having a small value $\nu$ are laminated so as to mutually off-set the respective retardations, or different polymers may be blended, filmed and stretched for the same purpose.

## Claims

1. An electro-optic liquid crystal device composed of a liquid crystal cell (2) having a liquid crystal layer (24) disposed between a pair of substrates (21, 22), an optical anisotropic layer (3) or a plurality of optical anisotropic layers and a pair of polarising plates (1, 5) between which said liquid crystal cell (2) and the optical anisotropic layer (3) or each of said layers are sandwiched, said optical anisotropic layer (3) or each of said layers having three main refractive indices N1o, N2o and N3e, N3e being smaller than N1o and N2o, characterised in that the axis corresponding to N3e is in the direction approximately parallel to the surface of the substrates (21, 22) of the liquid crystal cell (2).

2. An electro-optic liquid crystal device as claimed in claim 1 characterised in that the liquid crystal layer (24) is homogeneously oriented.

3. An electro-optic liquid crystal device as claimed in claim 1 characterised in that the liquid crystal layer (24) is twistedly oriented.

4. An electro-optic liquid crystal device as claimed in any preceding claim characterised in that said optical anisotropic layer (3) or each of said layers is a mono-axially stretched film consisting essentially of a polymer of the following acrylate derivatives:

   $CH_2$ = CX - COOR

   where X represents $-CH_3$, -Cl, -Br, -CN or -SCH group; and R represents an alkyl group having from 1 to 4 carbon atoms or a benzine ring derivative.

5. An electro-optic liquid crystal device as claimed in any of claims 1 to 3 characterised in that said optical anisotropic layer (3) or each of said layers is a mono-axially stretched film made of a mixture of a polymer and a liquid crystal material.

6. An electro-optic liquid crystal device as claimed in any of claims 1 to 3 characterised in that said optical anisotropic layer (3) or each of said layers is a mono-axially stretched polystyrene film.

7. An electro-optic liquid crystal device as claimed in any of claims 1 to 3 characterised in that said optical anisotropic layer (3) or each of said layers in a mono-axially stretched film made of a co-polymer of polystyrene and an organic polymer, or made of a mixture of polystyrene and an organic polymer.

8. An electro-optic liquid crystal device as claimed in any of claims 1 to 3 characterised in that said optical anisotropic layer (3) or each of said layers is a mono-axially stretched film of a polystyrene-organic polymer film laminate.

9. An electro-optic liquid crystal device as claimed in any preceding claim characterised in that the wavelength dispersion value ($\nu_{RF}$) of the double refractive indices ( $\Delta$ n) of said optical anisotropic layer (3) or each of said layers $\nu_{RF} \equiv \Delta n(450 \text{ nm})/\Delta n(650 \text{ nm})$ is larger than 0.95 times the wavelength dispersion value $\nu_{LC}$ of the refractive indices anisotropy $\Delta$ n of the liquid crystal layer (24).

10. An electro-optic liquid crystal device as claimed in any preceding claim characterised by including a further optical anisotropic layer (4) sandwiched between the polarisers (1, 5) and having positive uni-axiality.

## Patentansprüche

1. Elektrooptische Flüssigkristallvorrichtung aus einer Flüssigkristallzelle (2) mit einer zwischen einem Paar Substrate (21, 22) angeordneten Flüssigkristallschicht (24), einer optischen anisotropen Schicht (3) oder einer Mehrzahl optischer anisotroper Schichten und einem Paar polarisierender Platten (1, 5), zwischen denen die Flüssigkristallzelle (2) und die optische anisotrope Schicht (3) oder jede dieser Schichten eingebettet sind, wobei die optische anisotrope Schicht (3) oder jede dieser Schichten drei Hauptbrechungsindizes N10, N20, N3e aufweist, wobei N3e kleiner ist als N10 und N20,
   **dadurch gekennzeichnet,** daß die N3e entsprechende Achse in der Richtung verläuft, die nahezu parallel zur Oberfläche der Substrate (21, 22) der Flüssigkristallzelle (2) verläuft.

2. Elektrooptische Flüssigkristallvorrichtung nach Anspruch 1,
   **dadurch gekennzeichnet,** daß die Flüssigkristallschicht (24) homogen orientiert ist.

3. Elektrooptische Flüssigkristallvorrichtung nach Anspruch 1,
   **dadurch gekennzeichnet,** daß die Flüssigkristallschicht (24) gedreht orientiert ist.

4. Elektrooptische Flüssigkristallvorrichtung nach einem der vorausgehenden Ansprüche,
   **dadurch gekennzeichnet,** daß die optische anisotrope Schicht (3) oder jede dieser Schichten ein einachsig gestreckter Film ist, der im wesentlichen aus einem Polymer der folgenden Acrylat-Derivate besteht:

   $CH_2 = CX - COOR$

   wobei X die Gruppe $-CH_3$, -Cl, -Br, -CN oder -SCH und R eine Alkyl-Gruppe mit 1 bis 4 Kohlenstoffatomen oder einem Benzinringderivat darstellen.

5. Elektrooptische Flüssigkristallvorrichtung nach einem der Ansprüche 1 bis 3,
   **dadurch gekennzeichnet,** daß die optische anisotrope Schicht (3) oder jede dieser Schichten ein einachsig gestreckter Film ist, hergestellt aus einer Mischung aus einem Polymer und einem Flüssigkristallmaterial.

6. Elektrooptische Flüssigkristallvorrichtung nach einem der Ansprüche 1 bis 3,
   **dadurch gekennzeichnet,** daß die optische anisotrope Schicht (3) oder jede dieser Schichten ein einachsig gestreckter Polystyrolfilm ist.

7. Elektrooptische Flüssigkristallvorrichtung nach einem der Ansprüche 1 bis 3,
   **dadurch gekennzeichnet,** daß die optische anisotrope Schicht (3) oder jede dieser Schichten ein einachsig gestreckter Film ist, hergestellt aus einem Copolymer aus Polystyrol und einem organischen Polymer, oder hergestellt aus einer Mischung aus Polystyrol und einem organischen Polymer.

8. Elektrooptische Flüssigkristallvorrichtung nach einem der Ansprüche 1 bis 3,
   **dadurch gekennzeichnet,** daß die optische anisotrope Schicht (3) oder jede dieser Schichten ein einachsig gestreckter Film aus einem Filmlaminat aus Polystyrol und einem organischen Polymer ist.

9. Elektrooptische Flüssigkristallvorrichtung nach einem der vorausgehenden Ansprüche,
   **dadurch gekennzeichnet,** daß der Wellenlängendispersionswert ($\nu_{RF}$) der Doppelbrechungsindizes ($\Delta n$) der optischen anisotropen Schicht (3) oder jeder dieser Schichten $\nu_{RF} = \Delta n\ (450\ nm) / \Delta n\ (650\ nm)$ größer als 0,95 mal der Wellenlängendispersionswert ($\nu_{LC}$) der Brechungsindizes-Anisotropie $\Delta n$ der Flüssigkristallschicht (24) ist.

10. Elektrooptische Flüssigkristallvorrichtung nach einem der vorausgehenden Ansprüche,
    d**adurch gekennzeichnet,** daß eine weitere optische anisotrope Schicht (4) zwischen den Polarisierern (1, 5) eingebettet ist und eine positive Einachsigkeit aufweist.

## Revendications

1. Dispositif électro-optique à cristaux liquides constitué d'une cellule à cristaux liquides (2) comportant une couche de cristaux liquides (24) disposée entre une paire de substrats (21, 22), une couche optiquement anisotrope (3) ou une pluralité de couches optiquement isotropes, et une paire de plaques polarisantes (1, 5) entre lesquelles sont intercalées la cellule à cristaux liquides (2) et la couche optiquement anisotrope (3) ou chacune de ces couches, la couche optiquement anisotrope (3) ou chacune de ces couches comportant trois indices de réfraction principaux N1o, N2o et N3e, N3e étant inférieur à N1o et à N2o, caractérisé en ce que l'axe correspondant à N3e se trouve dans une direction approximativement parallèle à la surface de substrats (21, 22) de la cellule à cristaux liquides (2).

2. Dispositif électro-optique à cristaux liquides selon la revendication 1, caractérisé en ce que la couche de cristaux liquides (24) présente une orientation homogène.

3. Dispositif électro-optique à cristaux liquides selon la revendication 1, caractérisé en ce que la couche de cristaux liquides (24) présente une orientation torsadée.

4. Dispositif électro-optique à cristaux liquides selon l'une quelconque des revendications précédentes, caractérisé en ce que la couche optiquement anisotrope (3) ou chacune de ces couches est un film à orientation monoaxiale constituée essentiellement d'un polymère des dérivés acryliques suivants :

   $CH_2 = CX - COOR$

   où X est un groupe $-CH_3$, -Cl, -Br, -CN ou -SCH ; et R est un groupe alkyle ayant de 1 à 4 atomes de carbone ou un dérivé d'un noyau benzénique.

5. Dispositif électro-optique à cristaux liquides selon l'une quelconque des revendications 1 à 3, caractérisé en ce que la couche optiquement anisotrope (3) ou chacune de ces couches est un film à orientation monoaxiale constitué d'un mélange d'un polymère et d'un matériau de cristal liquide.

6. Dispositif électro-optique à cristaux liquides selon l'une quelconque des revendications 1 à 3, caractérisé en ce que la couche optiquement anisotrope (3) ou chacune de ces couches est un polystyrène à orientation mono-axiale.

7. Dispositif électro-optique à cristaux liquides selon l'une quelconque des revendications 1 à 3, caractérisé en ce que la couche optiquement anisotrope (3) ou chacune de ces couches est un film à orientation monoaxiale constitué d'un copolymère du polystyrène et d'un polymère organique, ou encore constitué d'un mélange de polystyrène et d'un polymère organique.

8. Dispositif électro-optique à cristaux liquides selon l'une quelconque des revendications 1 à 3, caractérisé en ce que la couche optiquement anisotrope (3) ou chacune de ces couches est un film à orientation monoaxiale constitué d'un stratifié de films de polystyrène et d'un polymère organique.

9. Dispositif électro-optique à cristaux liquides selon l'une quelconque des revendications précédentes, caractérisé en ce que l'indice de dispersion de longueurs d'ondes ($\nu_{RF}$) des indices de double réfraction ($\Delta n$) de la couche optiquement anisotrope (3) ou de chacune de ces couches, $\nu_{RF} = \Delta n$ (450 nm)/$\Delta n$ (650 nm) a une valeur plus grande que 0,95 fois l'indice de dispersion de longueur d'onde $\nu_{LC}$ de l'anisotropie des indices de réfraction $\Delta n$ de la couche de cristaux liquides (24).

10. Dispositif électro-optique à cristaux liquides selon l'une quelconque des revendications précédentes, caractérisé en ce qu'il comprend une couche optiquement anisotrope supplémentaire (4), intercalée entre les polariseurs (1, 5) et présentant un caractère uni-axial positif.

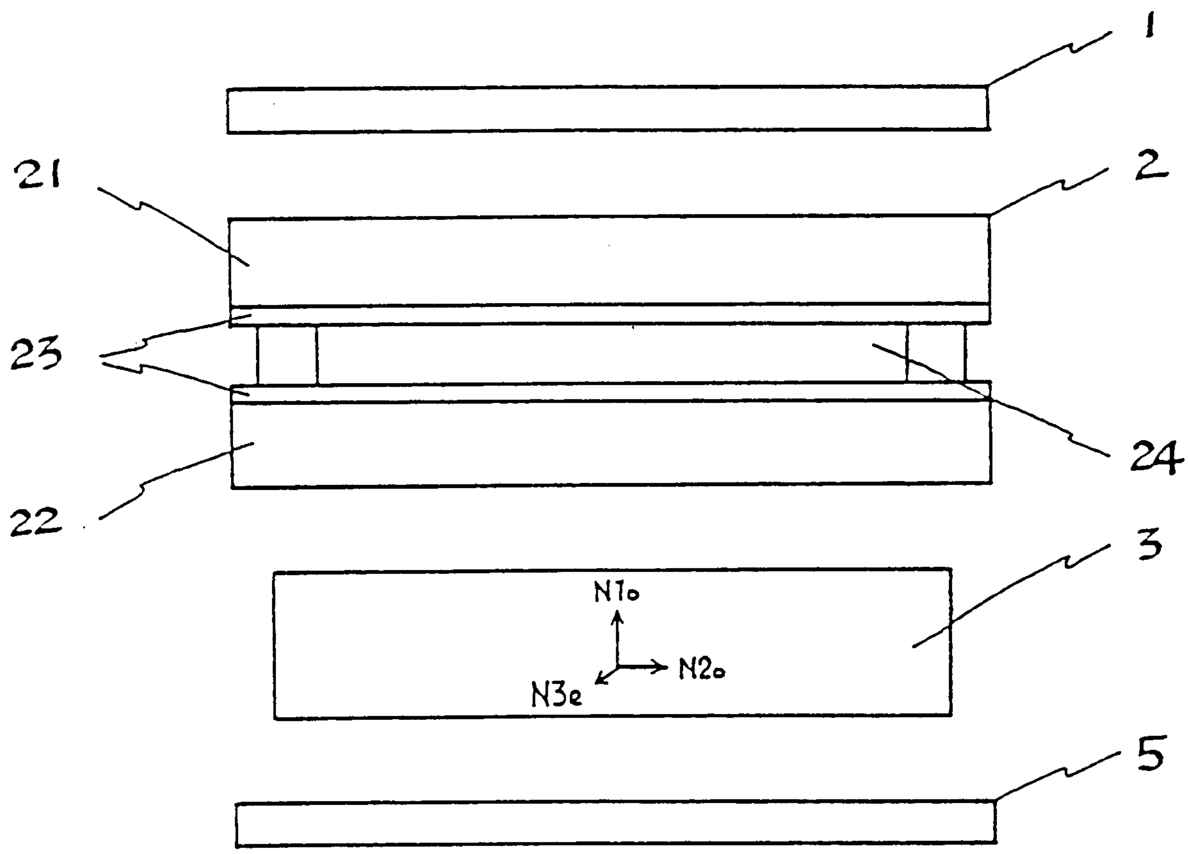


Fig. 1

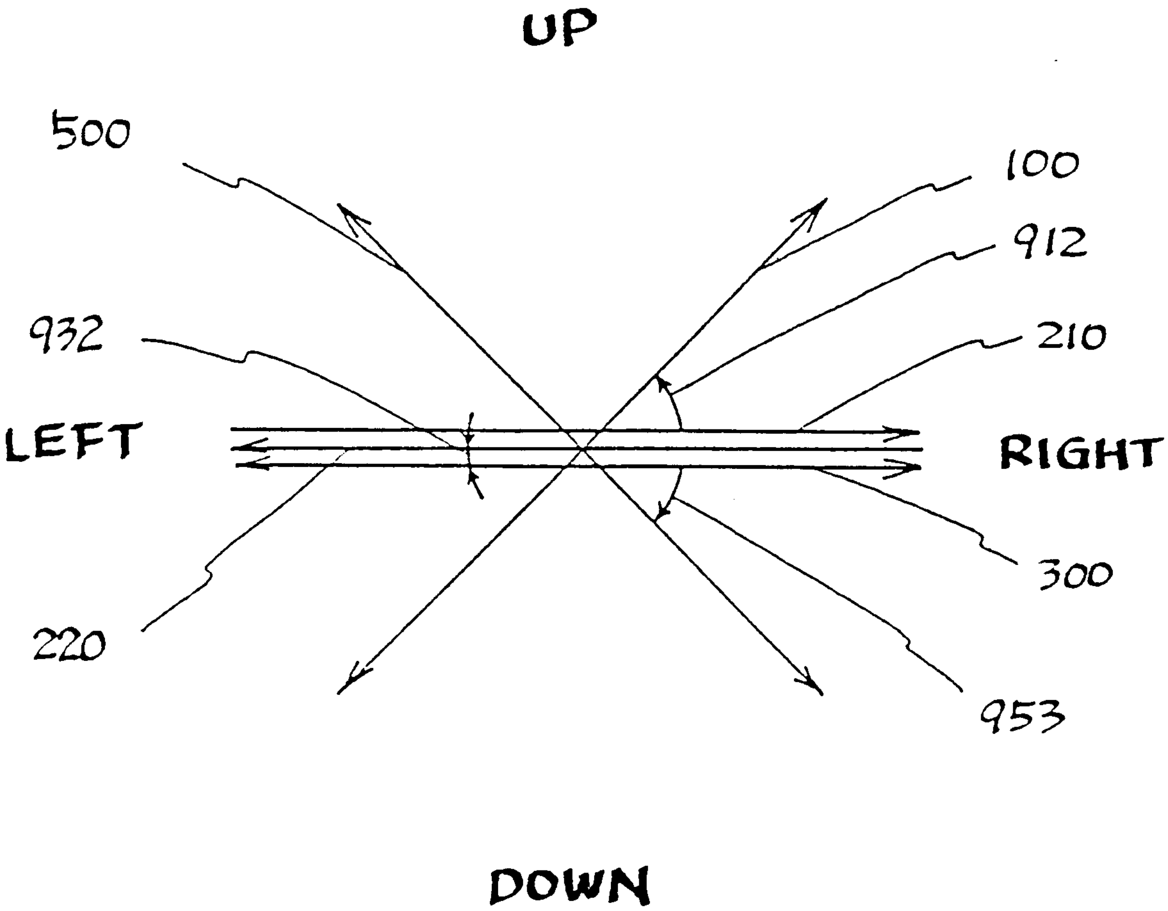


Fig. 2

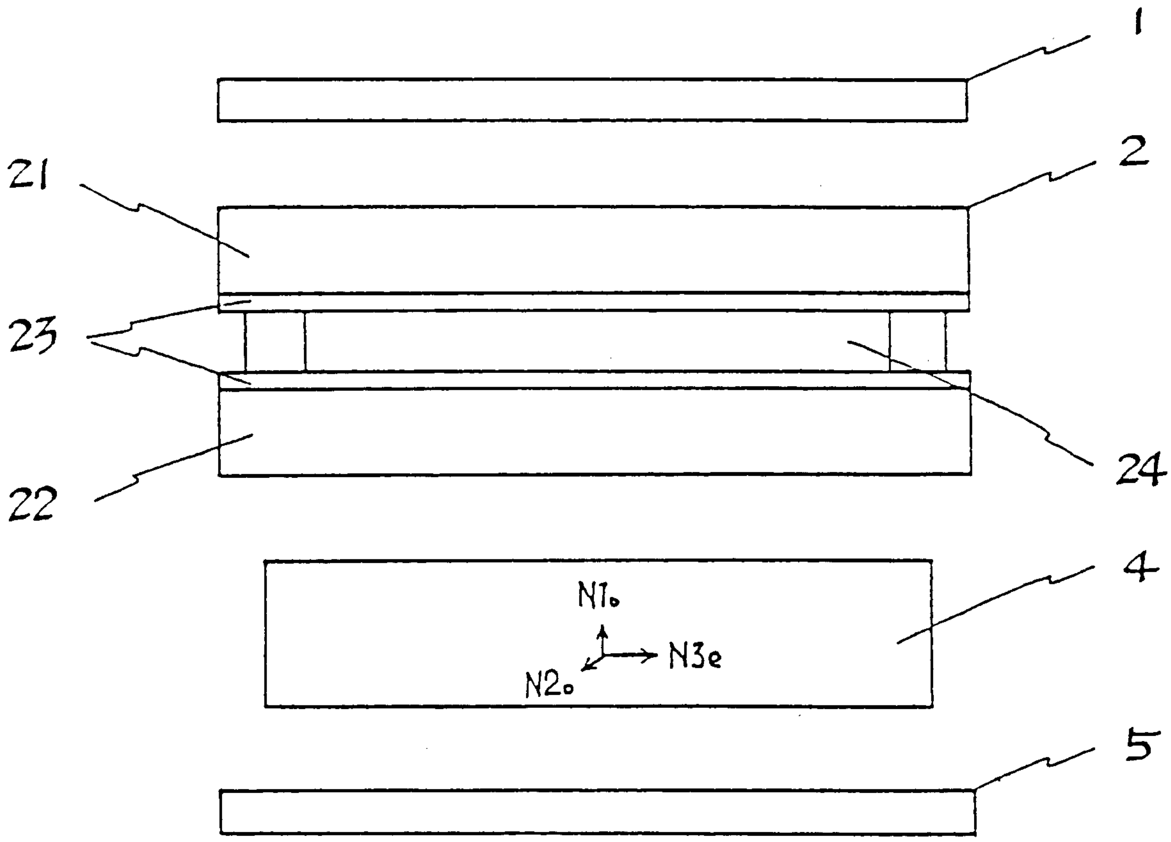


Fig.3

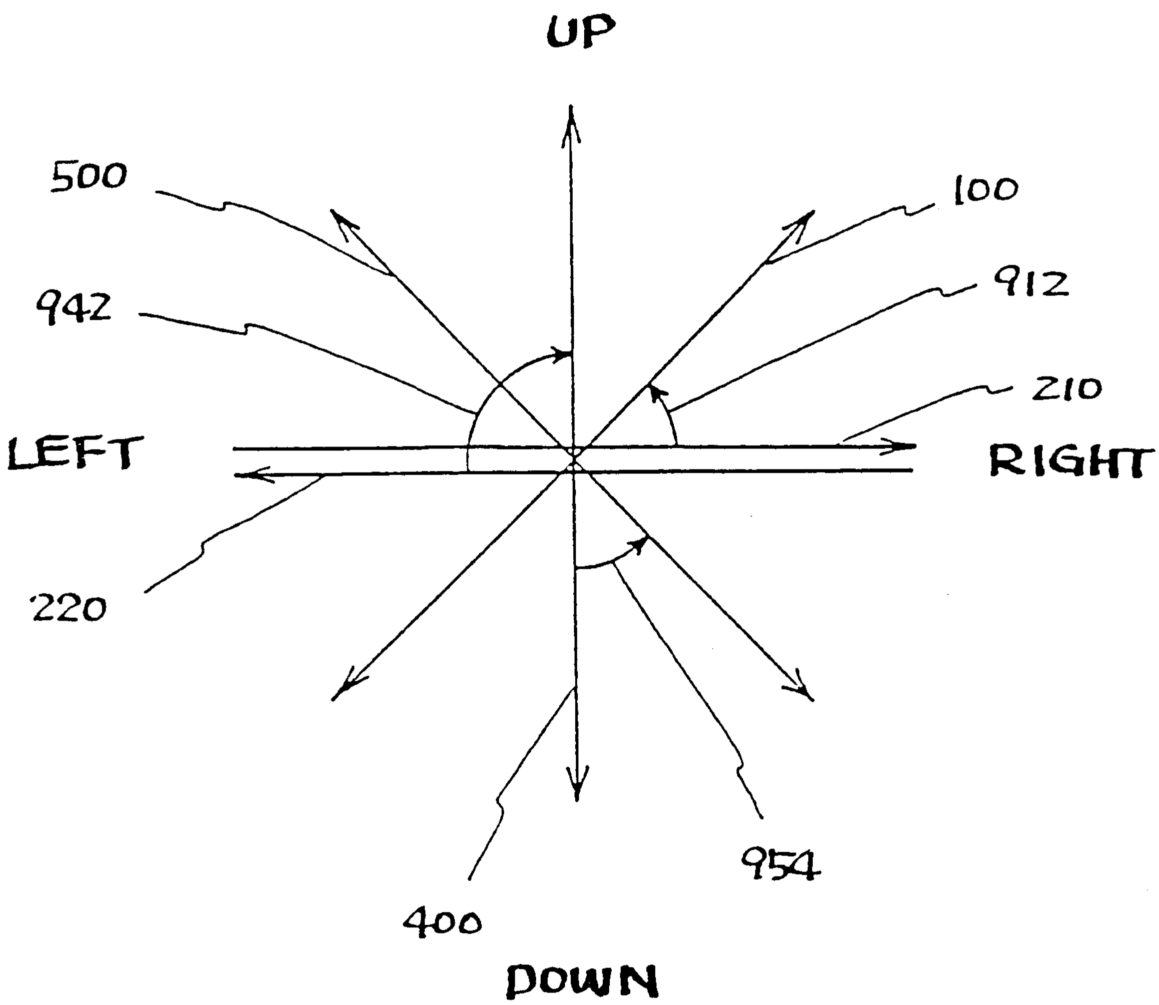


Fig. 4

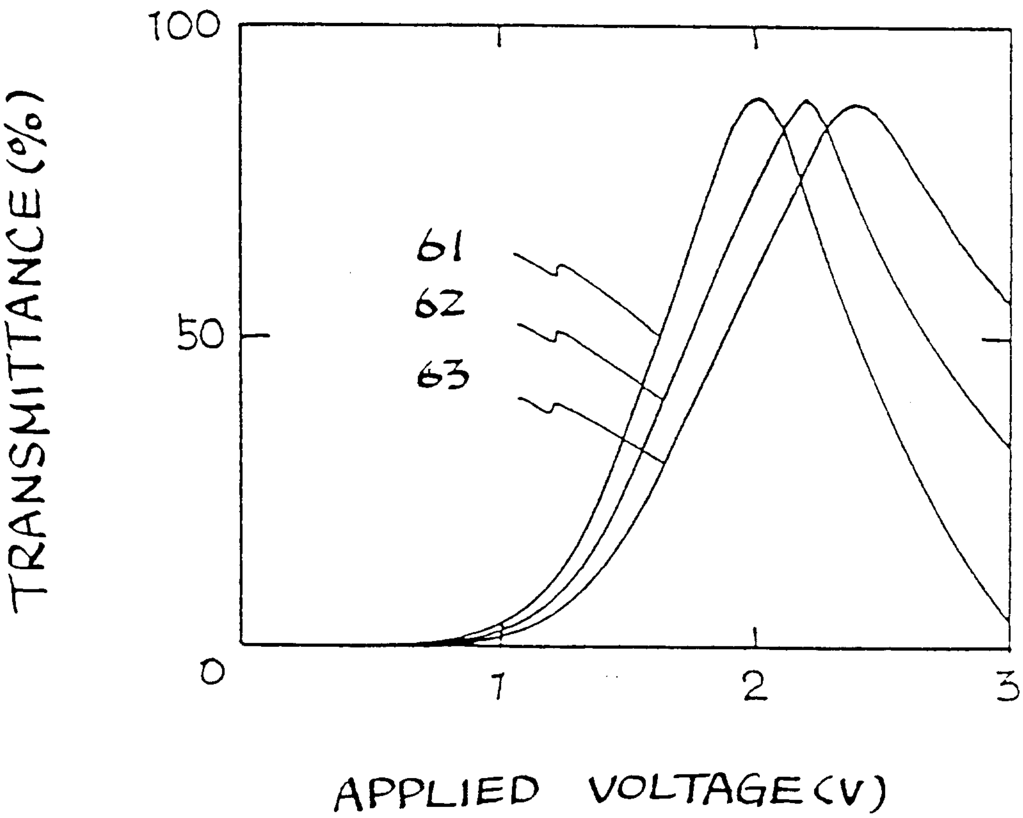


Fig. 5

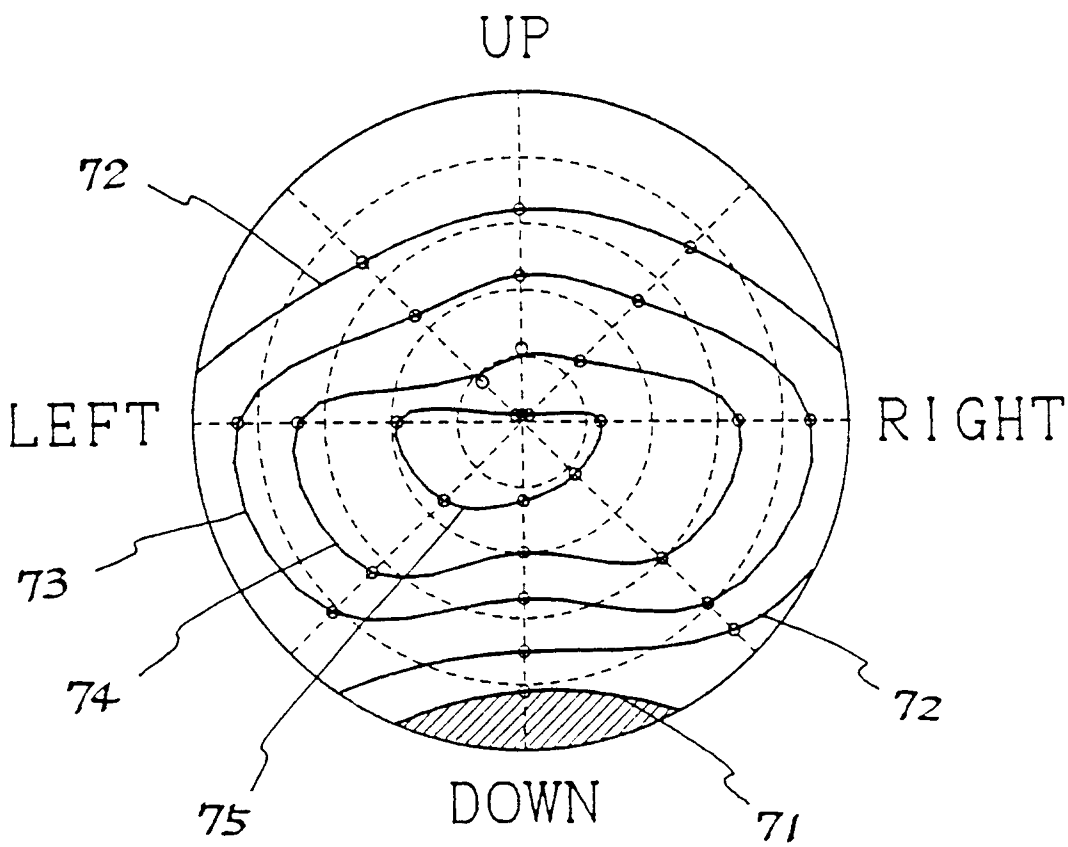


Fig. 6

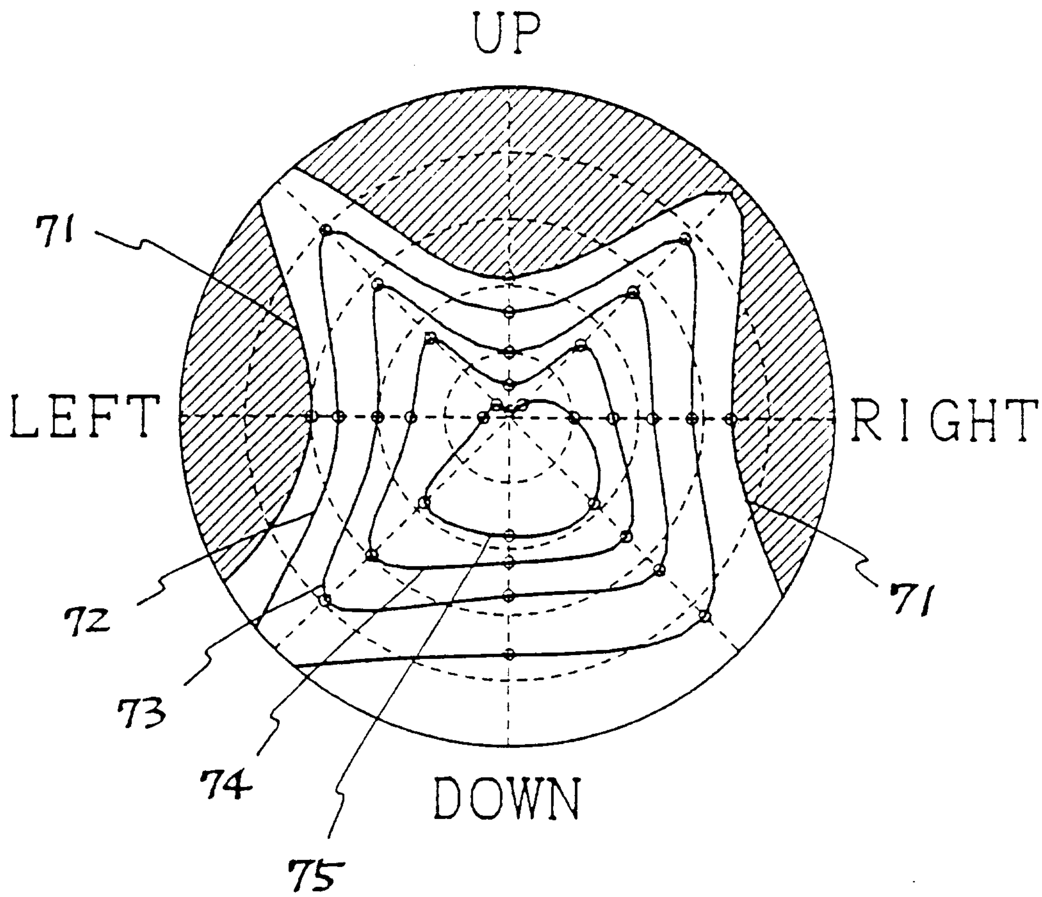


Fig.7

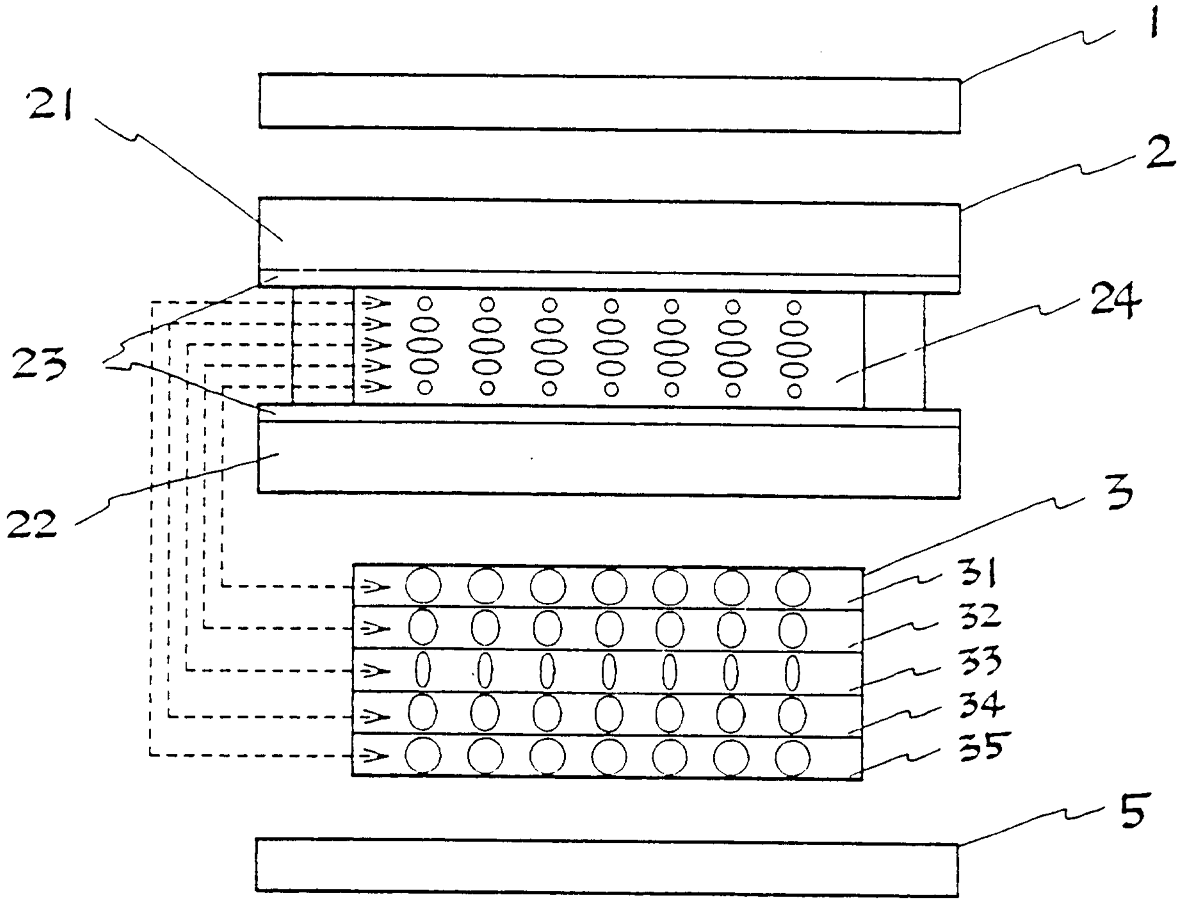


Fig. 8

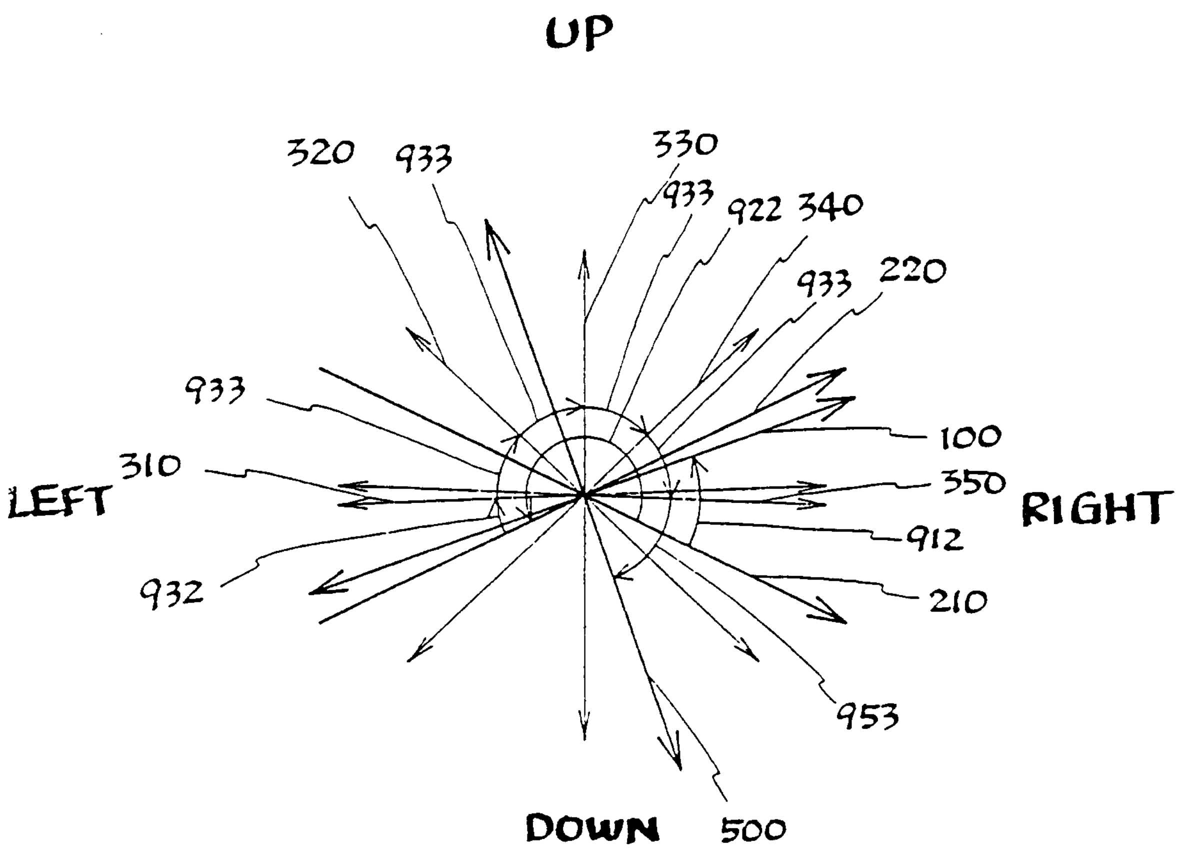
UP
320
933
330
933
922
340
933
220
933
100
310
LEFT
350
RIGHT
912
932
210
953
DOWN
500

Fig. 9

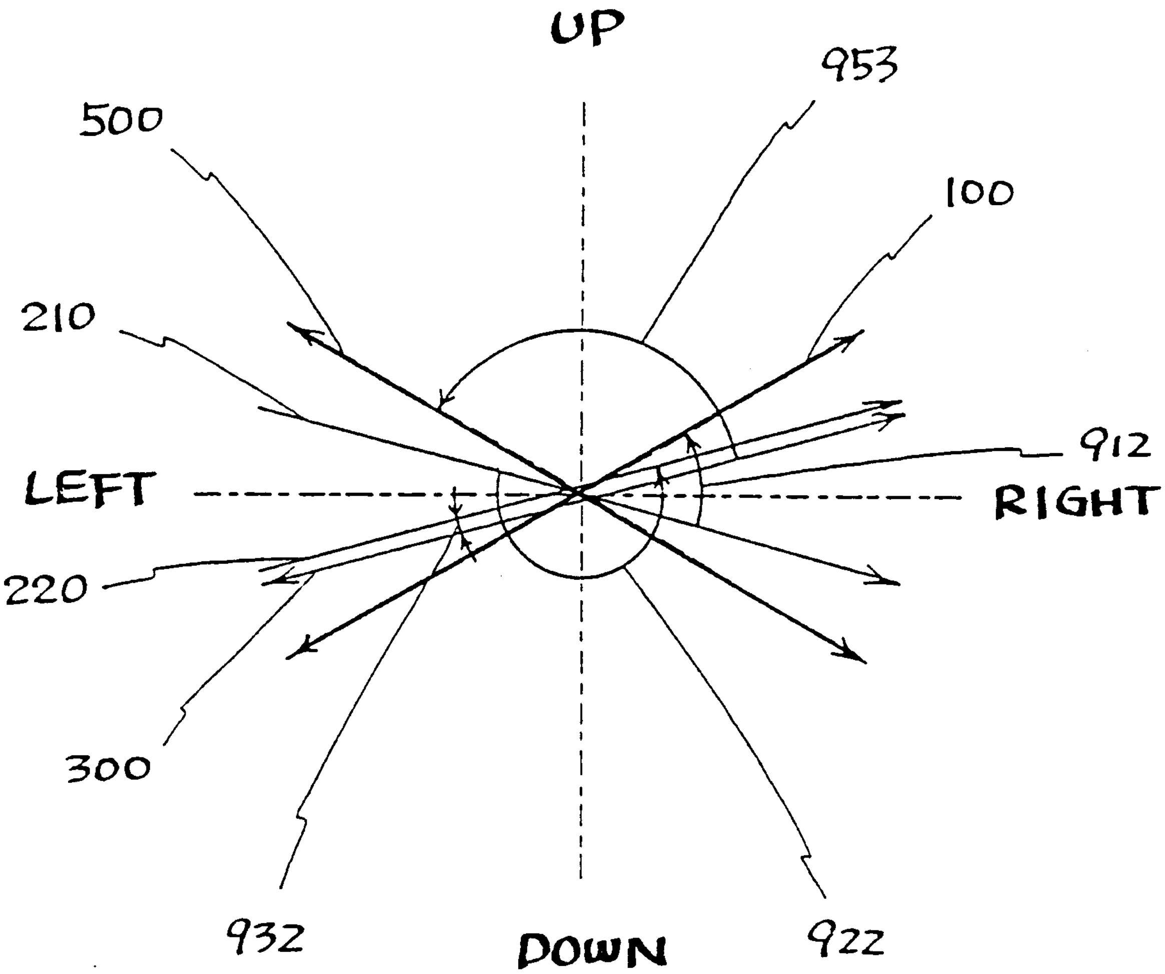


Fig.10

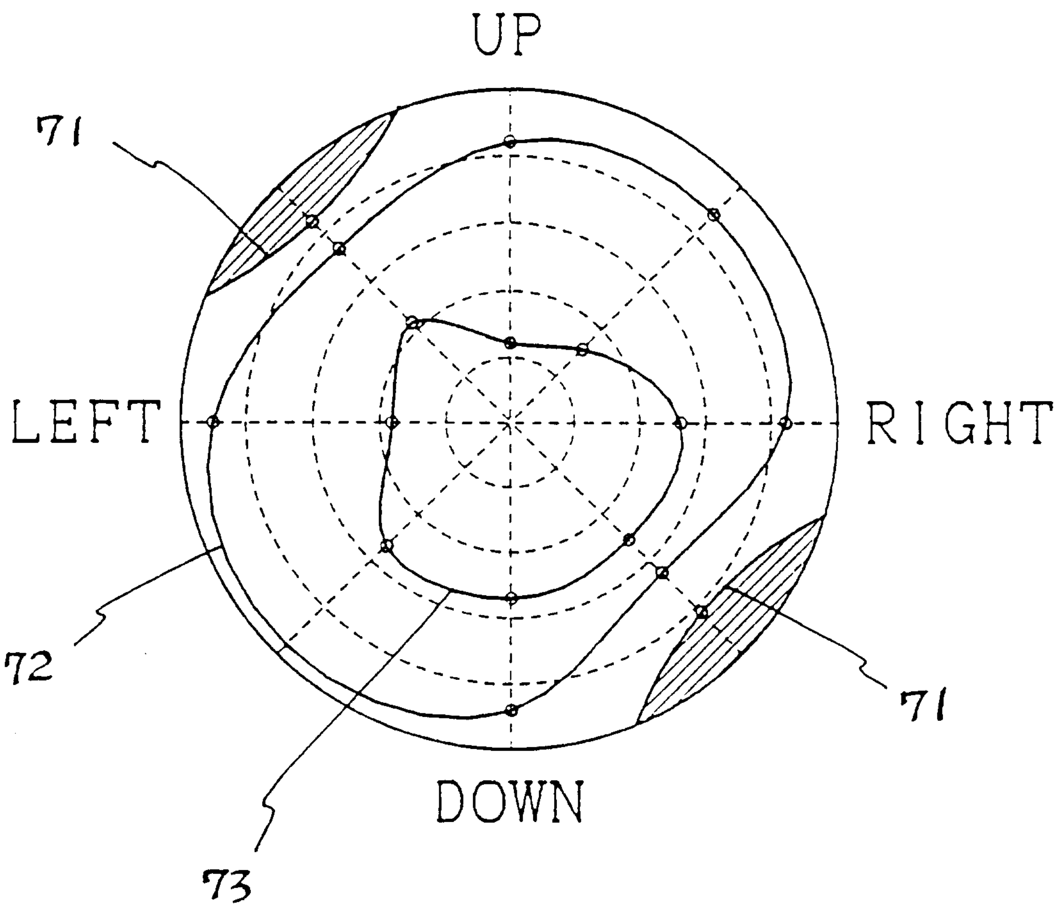


Fig. 11

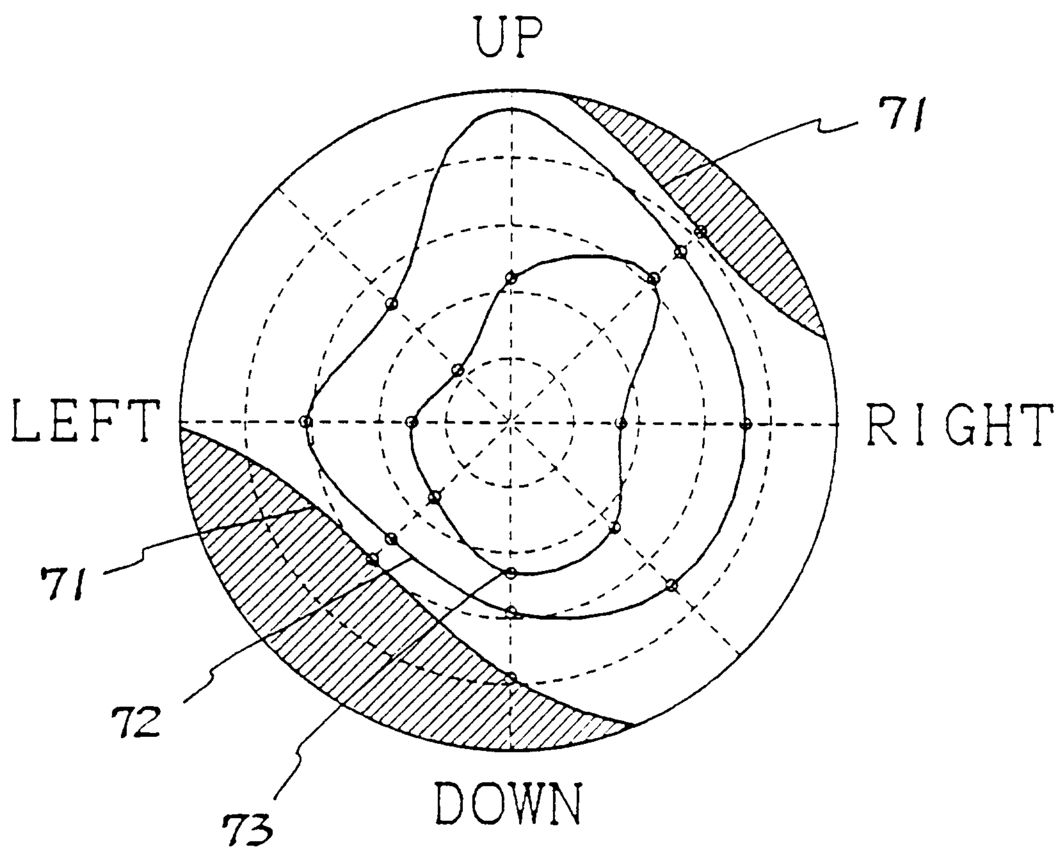


Fig. 12

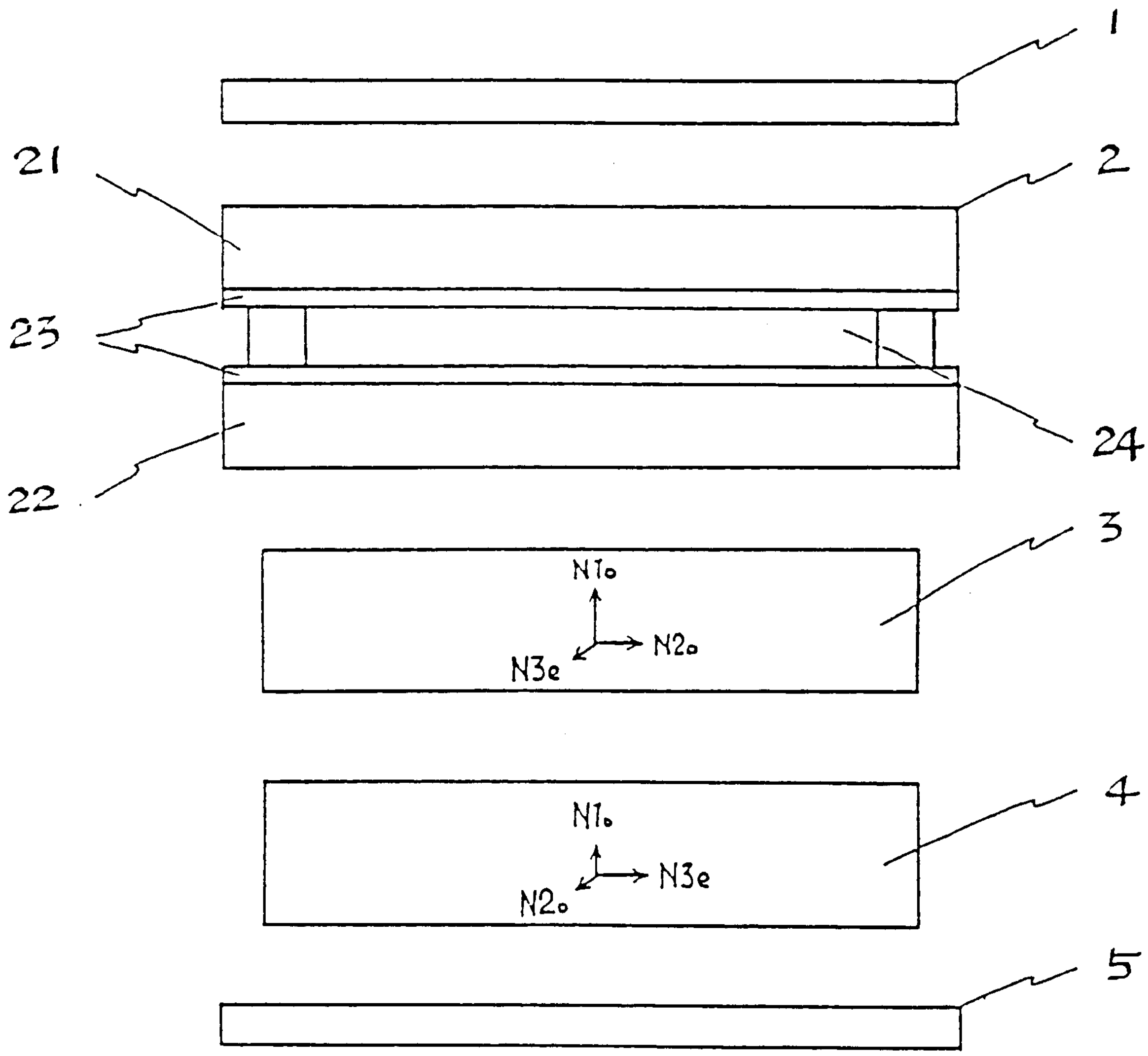


Fig. 13

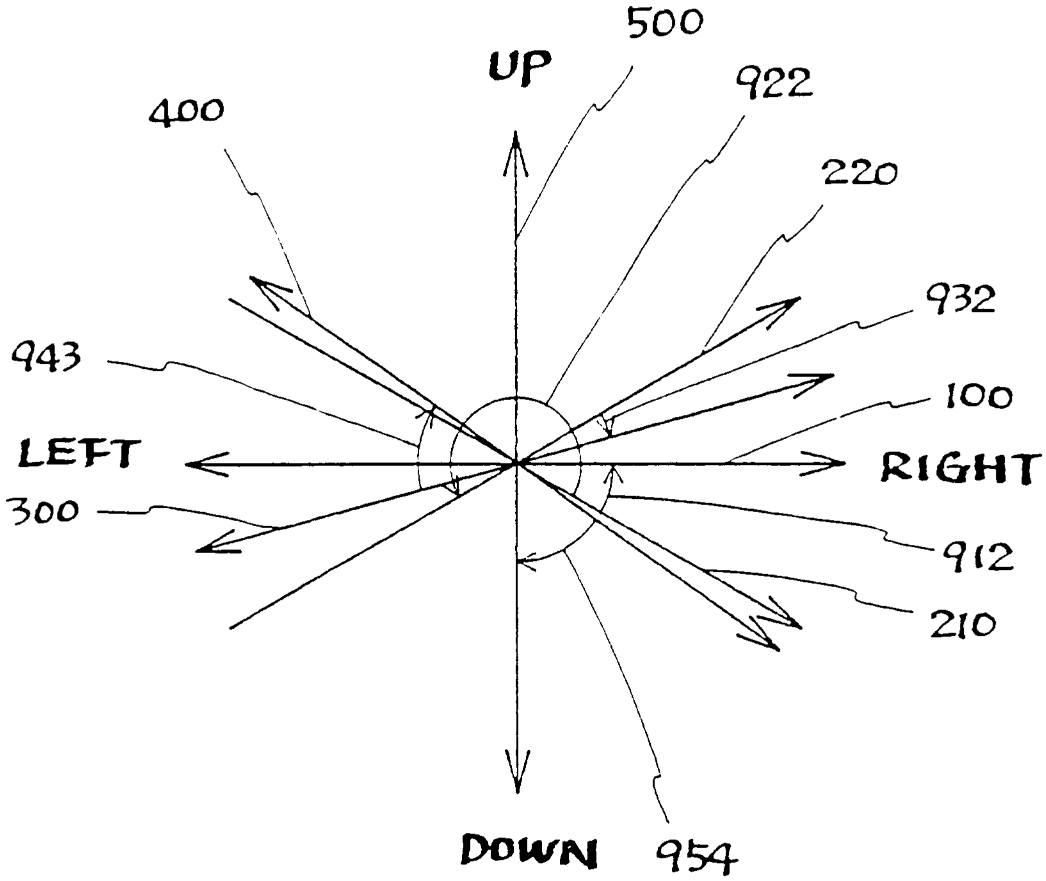


Fig. 14

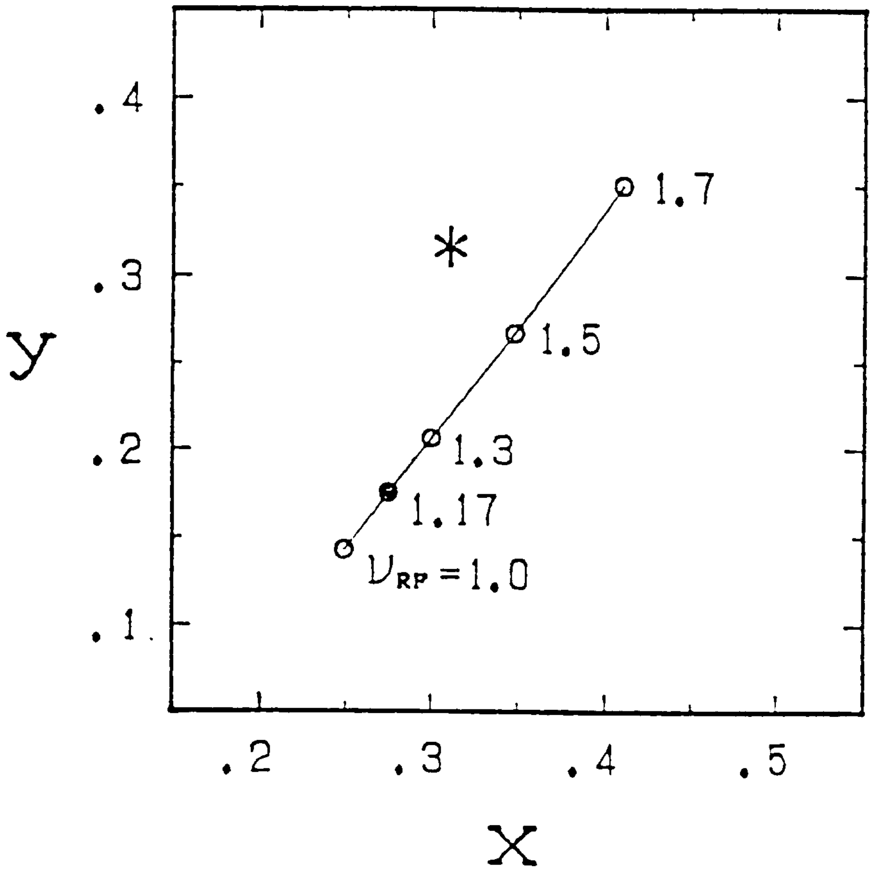


Fig. 15

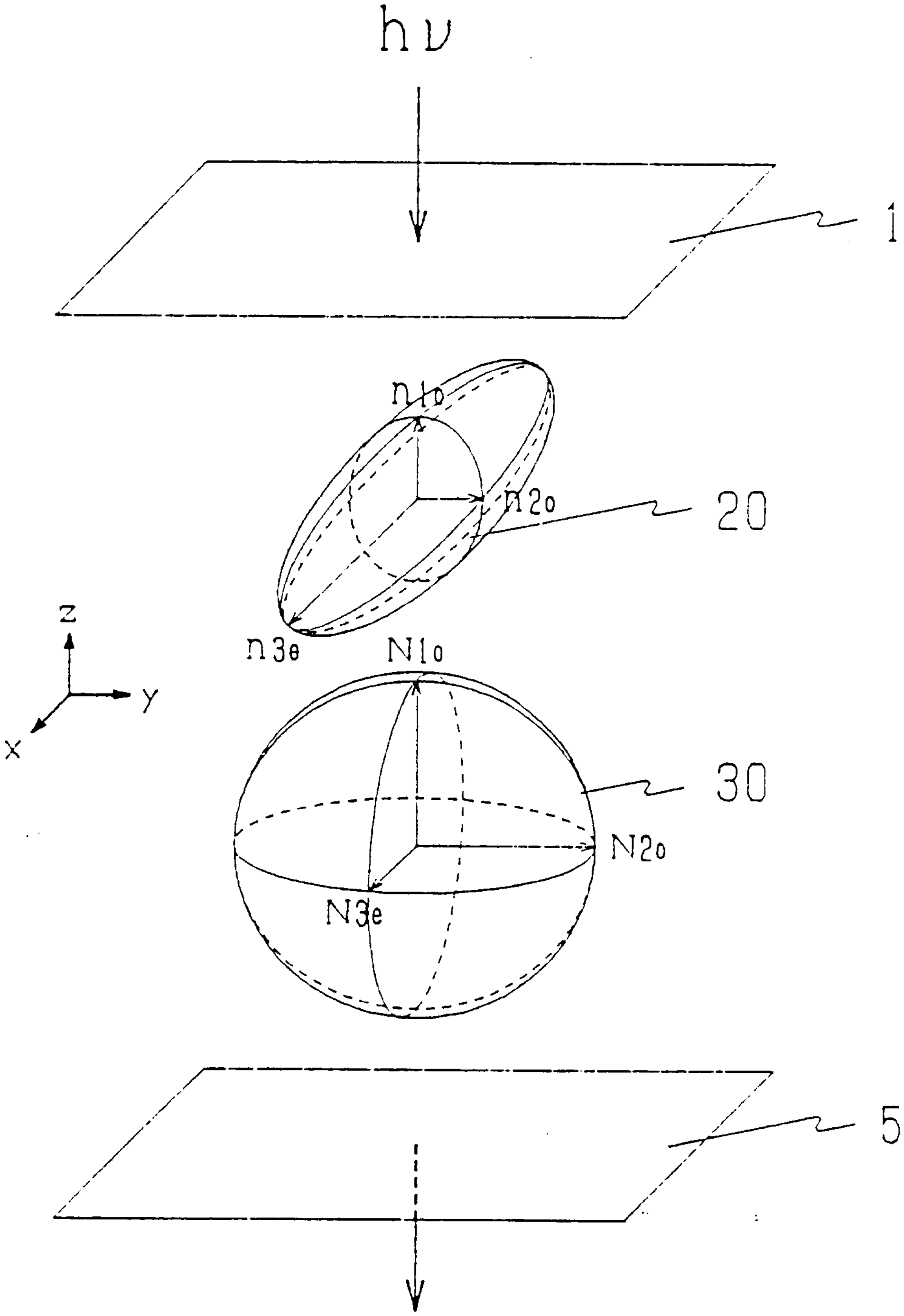


Fig. 16

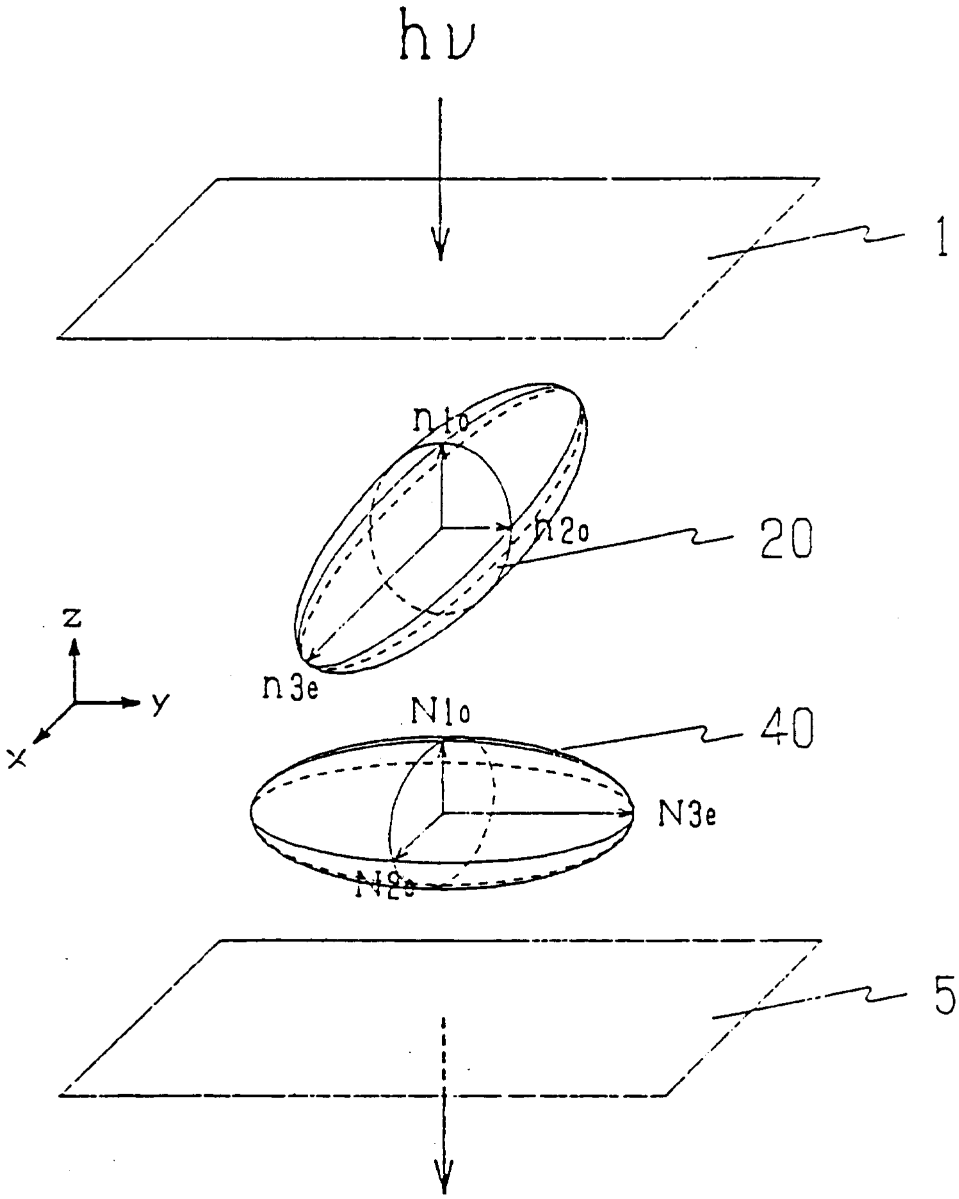


Fig. 17